(19) Europäisches Patentamt
European Patent Office
Office européen des brevets

(11) Numéro de publication: **0 390 655 A1**

(12) **DEMANDE DE BREVET EUROPEEN**

(21) Numéro de dépôt: **90400797.8**

(51) Int. Cl.⁵: **G02F 1/35, C08L 25/12**

(22) Date de dépôt: **23.03.90**

(30) Priorité: **31.03.89 FR 8904232**

(43) Date de publication de la demande: **03.10.90 Bulletin 90/40**

(84) Etats contractants désignés: **AT BE CH DE DK ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **Meyrueix, Rémi**
**112, Cours Albert Thomas**
**F-69008 Lyon(FR)**
Inventeur: **Mignani, Gérard**
**2, avenue des Frères Lumière**
**F-69008 Lyon(FR)**
Inventeur: **Monnerie, Lucien**
**69, rue Claude Bernard**
**F-75005 Paris(FR)**

(74) Mandataire: **Ricalens, François et al**
**RHONE-POULENC CHIMIE Service Brevets Chimie 25, quai Paul Doumer**
**F-92408 Coubevoie(FR)**

(54) **Matériaux actifs en optique non linéaire et dispositifs les contenant.**

(57) L'invention concerne un matériau actif en optique non linéaire et un dispositif le contenant.

Le matériau de l'invention est constitué par une matrice polymère dans laquelle est incorporé un composé hyperpolarisable tel que le "Disperse Red One" commercialisé par la société Aldrich, ce composé étant orienté par application d'un champ électrique. La matrice de l'invention est constituée par un copolymère styrène / acrylonitrile (SAN).

EP 0 390 655 A1

## MATERIAUX ACTIFS EN OPTIQUE NON LINEAIRE ET DISPOSITIFS LES CONTENANT

La présente invention concerne des matériaux présentant une activité en optique non linéaire et des dispositifs les contenant.

Elle concerne plus particulièrement des matériaux du type comprenant une matrice constituée par un polymère dans lequel est incorporé un composé hyperpolarisable.

De nombreux dispositifs optiques ou électrooptiques, tels que des interrupteurs, modulateurs, coupleurs directionnels, bistables utilisent la propriété de certains matériaux d'être actifs en optique non linéaire. Ainsi, les dispositifs utilisent comme élément actif en optique non linéaire des composés cristallisés inorganiques tels que $LiNbO_3$, des hydrogénophosphates tels que (KDP, ADP, KTP) ou des composés organiques. Ces composés organiques peuvent être des monocristaux, des couches moléculaires ordonnées du type Langmuir Blodgett, des polymères actifs. Dans ces derniers, l'activité en optique non linéaire est assurée généralement par un composé hyperpolarisable ordonné de façon centrosymétrique dans une matrice polymérisable.

On distingue deux classes dans les matériaux polymérisés actifs :

- les polymères fonctionnalisés dans lesquels les composés hyperpolarisables sont greffés par liaison covalente sur le squelette du polymère ; et
- les matériaux dans lesquels le composé hyperpolarisable est incorporé, par exemple par dissolution, dans la matrice polymérisable ou polymérisé. Ces derniers matériaux sont parfois appelés matériaux "Guest / host". A titre d'exemple de composé hyperpolarisable on peut citer le "Disperse Red One" commercialisé par la société Aldrich sous l'appelation "DR1".

Le brevet européen n° 218938 décrit un tel matériau et cite de nombreux composés organiques hyperpolarisables et des polymères compatibles pour former la matrice. Ainsi, les polymères cités sont les acrylates, méthacrylates, époxy transparents, le styrène ou les polycarbonates.

Le polymère généralement utilisé est le polyméthylmétacrylate (PMMA).

Toutefois, ces matériaux présentent certains inconvénients.

En effet, le système matrice/composés hyperpolarisables doit être compatible et, plus particulièrement, le composé hyperpolarisable doit présenter une solubilité la plus grande possible pour ainsi obtenir l'activité optique la plus élevée possible.

De plus, le matériau est activé par orientation des composés hyperpolarisables sous l'effet d'un champ électrique, électromagnétique ou magnétique. Toutefois, comme la matrice n'est pas un matériau parfaitement rigide empêchant tout mouvement des composés contenus, ceux-ci auront tendance à se désorienter, en d'autres termes à revenir à une position d'équilibre des charges dans le matériau.

Cette désorientation a bien entendu, pour conséquence une diminution de l'activité en optique non linéaire.

La présente invention a notamment pour but de remédier à ces inconvénients en proposant un nouveau matériau du type comprenant une matrice à base de polymère et un composé hyperpolarisable , présentant une activité en optique non linéaire plus élevée due principalement à une meilleure solubilité du composé hyperpolarisable et une diminution de la perte d'activité au cours du temps.

A cet effet, l'invention propose un matériau du type comprenant une matrice formée à base d'un polymère et au moins un composé hyperpolarisable caractérisé en ce que le polymère formant le constituant principal de la matrice est un copolymère styrène/acrylonitrile (SAN).

Ce polymère permet d'accroître sensiblement la solubilité des composés hyperpolarisables, et notamment, à titre d'exemple, ceux qui contiennent des radicaux cyano dans leur molécule, par affinité des groupements cyano, ou ceux contenant des radicaux polaires tels que le radical nitro qui forme un dipole avec le radical cyano du polymère.

Ainsi, l'activité en optique non linéaire de ces matériaux est sensiblement plus élevée que celle des matériaux réalisés avec d'autres polymères comme matrice, tels que du polyméthylmetacrylate.

De plus, la concentration en composé hyperpolarisable sera la plus élevée possible, sa limite supérieure étant limitée par la solubilité du composé dans le polymère.

Avantageusement, la concentration en mole de composé hyperpolarisable pour 100 g de matrice est comprise entre 0,005 et 0,1 environ.

Un autre avantage du matériau de l'invention réside dans la stabilité de l'activité en optique non linéaire en fonction du temps. En effet, il a été trouvé que le phénomène de désorientation des composés hyperpolarisables dans une matrice en copolymère styrène/acrylonitrile est nettement plus lent que celui observé dans d'autres matrices.

Selon une caractéristique préférée de l'invention, les copolymères SAN ont une teneur entre 5 % et 50

% environ de monomère acrylonitrile dans le copolymère.

Ces avantages de meilleure solubilité du composé hyperpolarisable et de meilleures stabilité au cours du vieillissement sont indépendants du poids moléculaire du copolymère.

Toutefois, les copolymères styrène/acrylonitrile ont, par exemple, un poids moléculaire $\overline{Mw}$ de l'ordre de 250.000. Ce poids moléculaire est choisi en fonction des propriétés rhéologiques et mécaniques requises du matériau pour l'application envisagée, par exemple la réalisation de revêtements, de films, pièces moulées ou analogues.

Selon une autre caractéristique de l'invention, le composé hyperpolarisable est choisi parmi les composés hyperpolarisables comprenant des radicaux cyano et/ou nitrol.

A titre d'exemple, des composés convenables peuvent être :

- ceux décrits dans l'article de H.E. Katz et al publié dans Mol. Cryst. Inc Non linear Opt. Vol. 157, p. 525-533 (1988) ayant les formules suivantes :

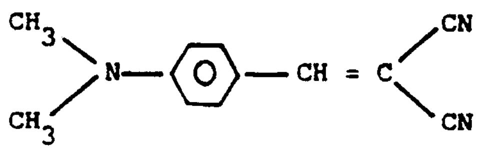

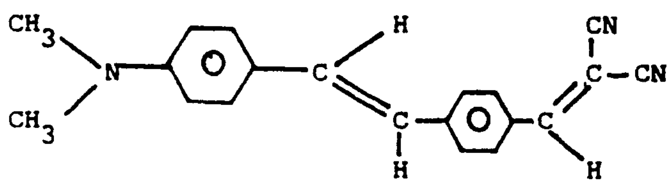

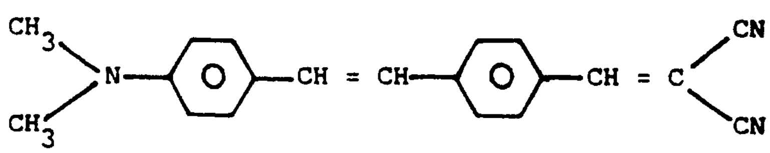

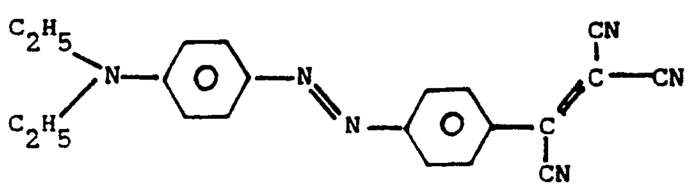

- le "Disperse Red One" ou "DR1" commercialisé par la société Aldrich ayant comme formule :

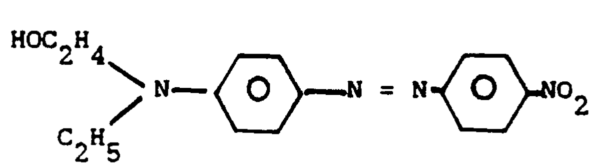

- ceux décrits dans la demande de brevet français n° 88 12028, non encore publiée et ayant pour formule générale :

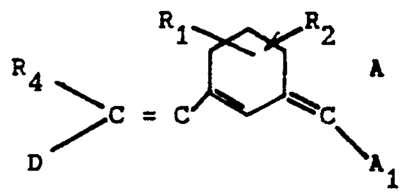

dans laquelle A et A₁ représentent des groupements accepteur d'électrons et D des groupements donneur d'électrons comme par exemple, le composé suivant de formule (A) :

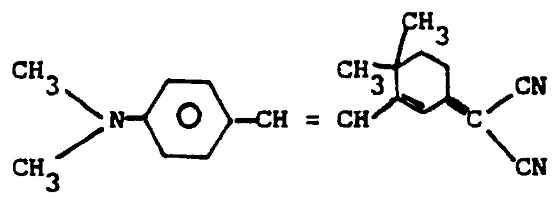 (A)

Cette liste n'est pas limitative. En effet, tout composé hyperpolarisable soluble dans le copolymère styrène/acrylonitrile est convenable pour l'invention.

Le matériau de l'invention peut être utilisé sous des formes quelconques telles que films, pièces moulées, extrudés, etc...

Il est également possible, sans pour cela sortir du cadre de l'invention, d'ajouter différents composants ou additifs dans le matériau pour améliorer ces propriétés mécaniques ou de mise en forme, par exemple des ignufigeants, des antistatiques, antioxydants, stabilisants ou analogues.

L'invention a également pour objet un dispositif optique ou optoélectrique comprenant au moins un élément constitué par le matériau selon l'invention.

Les matériaux de l'invention sont obtenus généralement par incorporation dans la matrice en copolymère styrène/acrylonitrile d'une quantité déterminée de composés hyperpolarisables. De préférence, le composé hyperpolarisable est solubilisé dans le copolymère à l'état fondu ou à l'état dissous dans un solvent.

Le polymère est ensuite chauffé à une température supérieure à sa température de transition vitreuse (Tg), puis soumis à un champ électrique intense pour orienter les molécules hyperpolarisables.

Le matériau est ensuite refroidi à une température inférieure à sa température de transition vitreuse (Tg) pour ainsi geler la position orientée des molécules actives.

Le procédé décrit ci-dessus est donné uniquement à titre d'exemple et ne limite en aucune façon l'invention.

On peut également cité, à titre d'exemple de procédé de fabrication de tels matériaux, le brevet européen n° 218 938.

Il est également aisément compréhensible que le matériau est conformé à la forme d'utilisation désirée de préférence avant de réaliser l'orientation des molécules.

L'activité des matériaux en optique non linéaire est déterminée par la mesure des susceptibilités de second, troisième ou énième ordre.

Les susceptibilités d'un matériau sont directement reliées à la polarisation du matériau par la relation fondamentale suivante :

$$\underline{P} = \underline{Po} + \chi^1 . \underline{E} + \chi^2 \underline{E.E} + \chi^3 \underline{E.E.E} + .....$$

dans laquelle : $\underline{P}$ et $\underline{Po}$ représentent la polarisation respectivement en présence et en absence de champ électromagnétique.

$\underline{E}$ représente le champ électrique d'excitation

$\chi^1$, $\chi^2$, $\chi^3$ représentent les susceptibilités linéaires et non linéaires du matériau.

En effet, le coefficient $\chi^1$ reflète son activité en optique linéaire.

Les coefficients $\chi^2$ et $\chi^3$ représentent les susceptibilités respectivement de second et troisième ordre.

Ces susceptibilités ref lètent l'anharmonicité du potentiel électronique dans le matériau.

Par ailleurs, les susceptibilités d'ordre impair, tel que la susceptibilité $\chi^3$ ne sont jamais nulles pour tous matériaux. Au contraire, les susceptibilités d'ordre pair tel que la susceptibilité quadratique $\chi^2$ sont nulles pour les matériaux centrosymétriques.

Il est intéressant d'utiliser des matériaux présentant une polarisation non linéaire non nulle pour les

applications en optique non linéaire telles que, par exemple, les dispositifs électrooptiques, les modulateurs électrooptiques, guidés ou non guidés ou pour les applications purement optiques telles que les amplificateurs paramétriques, les dispositifs doubleurs de fréquence.

Pour apprécier et mesurer le coefficient de susceptibilité $\chi^2$ des matériaux, on détermine celle-ci par comparaison avec celle d'un matériau de référence, par exemple le quartz ou le dihydrogénophosphate de potassium (KDP).

La mesure de la susceptibilité $\chi^2$ est réalisée généralement aux fréquences (-2 $\omega$; $\omega$, $\omega$) dans une expérience de doublement d'harmonique décrite dans l'article de S.K.KURTZ publié dans Quantum Electronics ed. H.RABIN, C.L.TANG academic Press, 1975, tome I pages 209 -281.

Il est également possible de mesurer $\chi^2$ aux fréquences (- $\omega$ ; $\omega$, o) dans une expérience d'électrooptique. Pour cela, le film est déposé sur une lame de verre recouverte d'un oxyde conducteur transparent ($SnO_2$). La face extérieure du film est recouverte par une couche d'or semi-transparente, l'oxyde et l'or servant d'électrodes par lesquelles on polarise le film pour le rendre non centrosymétrique. Après refroidissement, l'ensemble est placé dans l'un des bras d'un interféromètre de MACH ZENDER et traversé sous incidence normale par un faisceau laser de longueur d'onde égale à 633 nm.

Le film est ensuite soumis à une tension alternative de 1 KHz et 10V.

La susceptibilité quadratique $\chi^2_{113}$ (- $\omega$ ; $\omega$,o) est déduite du retard de phase $\Delta\Phi$ provoqué par la tension appliquée au film par la relation suivante :

$$\Delta\Phi = \frac{2\pi}{\lambda} \cdot L \cdot \frac{\chi^2_{113}}{n} \cdot \frac{V}{L} = \frac{2\,\chi^2_{113}\,V}{\lambda \cdot n}$$

Dans laquelle : $\lambda$ est la longueur d'onde laser
n est l'indice de réfraction du film
V est la tension électrique du champ appliqué au film
L est l'épaisseur du film.

Le deuxième coefficient de susceptibilité $\chi^2_{333}$ est donné par la relation

$\chi^2_{333} = 3.\chi^2_{113}$

Cette relation est plus amplement décrite dans l'article de K.D. SINGER et al parue dans J. Opt. SOc. Am. B vol 4 n° 6 pp 968 et suiv. (1987).

Les susceptibilités $\chi^2_{113}$ et $\chi^2_{333}$ sont reliées au coefficient électrooptique $r_{ijk}$ par les relations suivantes :

$$r_{113} = \frac{-2\chi^2_{113}}{n^4} \quad \text{et} \quad r_{333} = \frac{-2\chi^2_{333}}{n^4}$$

Dans lesquelles n représente l'indice de réfraction du matériau.

D'autres buts, détails et caractéristiques de l'invention apparaîtront plus clairement au vu des exemples donnés ci-dessous uniquement à titre indicatif et d'illustration.

Exemple 1 :

Un film de matériau selon l'invention a été réalisé par filmage d'un mélange à base d'un copolymère styrène/acrylanitrile (SAN) de $\overline{Mw}$ égal à 1,27 x $10^6$g et d'un composé hyperpolarisable, le "Dispers Red One".

La concentration en "Disperse Red One" est de 20 gr/100gr de SAN (0,064 mole/100 gr de SAN).

Le film est ensuite chauffé à 105° C puis soumis à un champ électrique de 30 V/µm.

Enfin, ce film est refroidi à température ambiante et sa susceptibilité $\chi^2$ (-$\omega$ ;$\omega$, o) est mesurée selon la méthode décrite ci-dessus. Le résultat est indiqué dans le tableau I ci-dessous.

De plus, on détermine la vitesse de désorientation du dopant par mesure de la variation relative de la susceptibilités (-ω ; ω, o) entre l'instant t=0 et l'instant t=100 mm qui suivent la suppression du champ électrique d'orientation. Cette détermination est réalisée pour plusieurs températures.

Exemple 2

L'exemple 1 est répété, à l'exception du composé hyperpolarisable qui est le composé de formule A utilisé à la place du "Disperse Red One".

La concentration en composé hyperpolarisable A est de 15 gr/100gr de SAN (0,043 mole/ 100 gr de SAN).

Exemples 3 et 4

Les exemples 1 et 2 sont répétés en utilisant comme matrice un copolymère styrène/acrylonitrile ayant un poids moléculaire de 180000 g.

Exemple 5 comparatif

L'exemple 1 est répété en utilisant comme matrice du polyméthylmetacrylate (PMMA) commercialisé par la société CDF Chimie et ayant un poids moléculaire de 124000.

La concentration en composés hyperpolarisables est de 7,52 gr/100 gr de PMMA soit 0,024 mole / 100 gr de PMMA.

| - Susceptibilités quadratique $\chi^2$ des matériaux | | | |
|---|---|---|---|
| EXEMPLE | SYSTEME | CONCENTRATION EN COMPOSE % | $\chi^2$ 3.33 pm.volt$^{-1}$ |
| 1 | SAN/RD1 | 7 | 8,3 |
| 2 | SAN/formule A | 4,1 | 5,4 |
| 3 | SAN/RD1 | 15 | 14,4 |
| 4 | SAN/formule A | 10 | 6,9 |
| 5 | PMMA/RD1 | 7,5 | 7,7 |

| - Stabilité | | | |
|---|---|---|---|
| TEMPERATURE °C | VITESSE DE DESORIENTATION $\Delta\chi^2/\chi^2$ en % | | |
| | EXEMPLE 1 | EXEMPLE 3 | EXEMPLE 5 |
| 20 | 6,2 | 7,0 | 15,6 |
| 30 | 10 | 9,9 | 30 |
| 40 | 13,7 | 13 | 40,6 |
| 50 | 21,8 | 18 | 54,3 |

Ces résultats montrent clairement, d'une part la stabilité du matériau de l'invention par rapport aux matériaux connus, et d'autre part le fait que le poids moléculaire du copolymère SAN n'a pas d'influence sur cette stabilité.

Ce dernier résultat est important car il permet de faire varier la viscosité du polymère pour faciliter sa mise en forme. Ainsi, si on utilise un procédé dit "solvent" c'est à dire une dissolution du polymère dans un

solvent pour le mettre en forme et dissoudre le composé hyperpolarisable, on peut contrôler la viscosité de la solution par le choix du poids moléculaire du copolymère SAN.

De manière identique, on pourra obtenir la viscosité désirée du polymère par choix de son poids moléculaire, dans le procédé par voie "fondue", à savoir fusion du polymère pour incorporer le composé hyperpolarisable et mise en forme du matériau.

**Revendications**

1/ Matériau du type comprenant une matrice formée à base d'un polymère et au moins un composé hyperpolarisable caractérisé en ce que le polymère formant le constituant principal de la matrice est un copolymère styrène/acrylonitrile.

2/ Matériau selon la revendication 1, caractérisé en ce que la concentration en composé hyperpolarisable est comprise entre 0,005 et 0,1 mole de composé pour 100 g de copolymère.

3/ Matériau selon la revendication 1 ou 2, caractérisé en ce que la teneur en monomère acrylonitrile dans le copolymère est comprise entre 5 % et 50 %.

4/ Matériau selon la revendication 1, 2 ou 3, caractérisé en ce que le copolymère styrène/acrylonitrile a un poids moléculaire moyen $\overline{Mw}$ de l'ordre de 250 000.

5/ Matériau selon l'une des revendications 1 à 4 caractérisé en ce que le composé hyperpolarisable est choisi dans le groupe comprenant les composés :

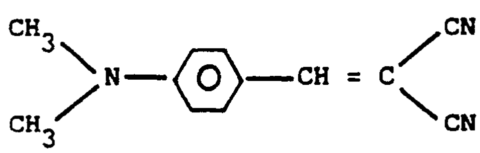

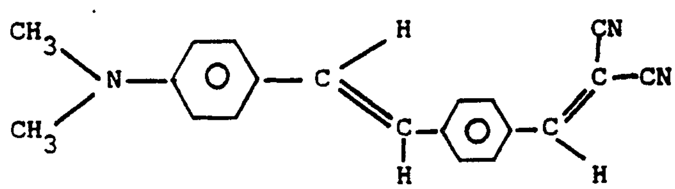

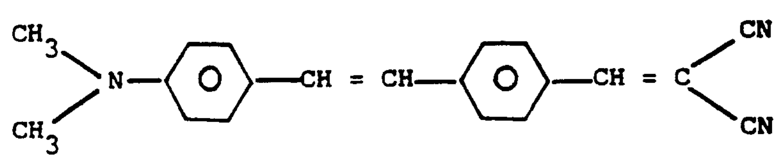

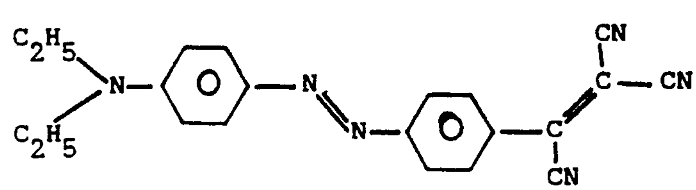

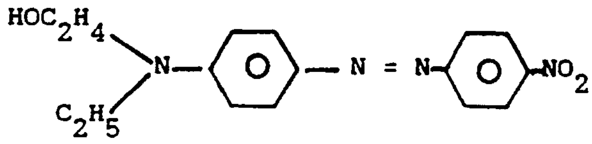

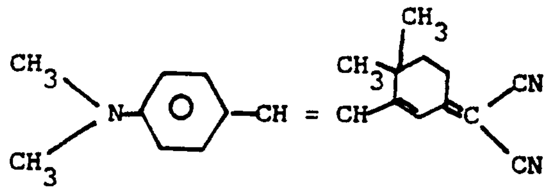

6/ Matériau selon l'une des revendications précédentes, caractérisé en ce qu'il est sous forme de film.

7/ Matériau selon l'une des revendications 1 à 5, caractérisé en ce qu'il est sous forme de pièce mise en forme.

8/ Matériau selon l'une des revendications précédentes, caractérisé en ce qu'il comprend des additifs.

9/ Dispositif optique ou optoélectrique caractérisé en ce qu'il comprend au moins un élément constitué par le matériau selon l'une des revendications précédentes.

Office européen des brevets

# RAPPORT DE RECHERCHE EUROPEENNE

Numero de la demande

EP 90 40 0797

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | MAT. RES. SOC. SYMP. PROC., vol. 109, 1988, pages 251-260, Materials Research Society, New York, US; J.C. LUONG et al.: "Quadratic electro-optical characterization of molecular nonlinear optical materials"<br>* Figure 3; tableau 1 *<br>----- | 1 | G 02 F 1/35<br>C 08 L 25/12 |
| | | | **DOMAINES TECHNIQUES RECHERCHES (Int. Cl.5)** |
| | | | G 02 F<br>C 08 L<br>C 08 K |

Le présent rapport a été établi pour toutes les revendications

| Lieu de la recherche | Date d'achèvement de la recherche | Examinateur |
|---|---|---|
| LA HAYE | 09-07-1990 | SCHUELER D.H.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant